(19) Europäisches Patentamt
European Patent Office
Office européen des brevets

(11) Veröffentlichungsnummer : **0 467 144 B1**

# (12) EUROPÄISCHE PATENTSCHRIFT

(45) Veröffentlichungstag der Patentschrift : **29.09.93 Patentblatt 93/39**

(51) Int. Cl.[5] : **B01J 27/198,** B01J 27/053, C07C 51/25, C07C 57/04, B01J 27/19

(21) Anmeldenummer : **91110978.3**

(22) Anmeldetag : **03.07.91**

**(54) Massen der allgemeinen Formel Mo12PaVbX1cX2dX3eSbfRegShOn.**

(30) Priorität : **12.07.90 DE 4022212**

(43) Veröffentlichungstag der Anmeldung : **22.01.92 Patentblatt 92/04**

(45) Bekanntmachung des Hinweises auf die Patenterteilung : **29.09.93 Patentblatt 93/39**

(84) Benannte Vertragsstaaten : **BE DE ES FR GB IT**

(56) Entgegenhaltungen :
**EP-A- 0 051 348**
**EP-A- 0 124 706**
**EP-A- 0 253 896**
**EP-A- 0 265 733**
**EP-A- 0 376 117**

(73) Patentinhaber : **BASF Aktiengesellschaft**
**Carl-Bosch-Strasse 38**
**D-67063 Ludwigshafen (DE)**

(72) Erfinder : **Boehning, Karl-Heinz Dr.**
**Bruesseler Ring 32**
**W-6700 Ludwigshafen (DE)**
Erfinder : **Duembgen, Gerd Dr.**
**Auerstrasse 14**
**W-6700 Ludwigshafen (DE)**
Erfinder : **Hammon, Ulrich Dr.**
**Rudolfstrasse 27**
**W-7500 Karslruhe 1 (DE)**
Erfinder : **Krabetz, Richard Dr.**
**Unterer Waldweg 8**
**W-6719 Kirchheim (DE)**
Erfinder : **Merger, Franz, Dr.**
**Max-Slevogt-Strasse 25**
**W-6710 Frankenthal (DE)**
Erfinder : **Schwarzmann, Mathias Dr.**
**Carl-Bosch-Strasse 54**
**W-6703 Limburgerhof (DE)**
Erfinder : **Thiessen, Fritz Dr.**
**Friedlandweg 15**
**W-6700 Ludwigshafen (DE)**
Erfinder : **Vogel, Herbert Dr.**
**Wolfsgrubenweg 17**
**W-6700 Ludwigshafen (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Massen der allgemeinen Formel I

$$Mo_{12} P_a V_b X^1_c X^2_d X^3_e Sb_f Re_g S_h O_n \qquad (I),$$

in der die Variablen folgende Bedeutung haben:

| | |
|---|---|
| $X^1$ | Kalium, Rubidium und/oder Cäsium, |
| $X^2$ | Kupfer und/oder Silber, |
| $X^3$ | Cer, Bor, Zirkonium, Mangan und/oder Wismut, |
| a | 0,5 bis 3,0 , |
| b | 0,01 bis 3,0 , |
| c | 0,2 bis 3,0 , |
| d | 0,01 bis 2,0 , |
| e | 0 bis 2,0 , |
| f | 0,01 bis 2,0 , |
| g | 0 bis 1,0 , |
| h | 0,001 bis 0,5 und |

n eine Zahl, die durch die Wertigkeit und Häufigkeit der von Sauerstoff verschiedenen Elemente in I bestimmt wird.

Außerdem betrifft die vorliegende Erfindung das Verfahren zur Herstellung von Massen der allgemeinen Formel I und deren Verwendung als Katalysatoren bei der Herstellung von Methacrylsäure durch katalytische Gasphasenoxidation von Methacrolein.

Die EP-A 265 733 betrifft Massen der allgemeinen Formel II

$$Mo_{12} P_{a'} V_{b'} X^4_{c'} Cu_{d'} X^5_{e'} X^6_{f'} Zn_{g'} X^7_{h'} O_{n'} \qquad (II),$$

in der die Variablen folgende Bedeutung haben:

| | |
|---|---|
| $X^4$ | Kalium, Rubidium, Cäsium und/oder Thallium, |
| $X^5$ | Cer, Bor, Zirkonium, Mangan, Wismut, Wolfram, Magnesium, Chrom, Zinn, Tantal und/oder Cadmium, |
| $X^6$ | Antimon und/oder Eisen, |
| $X^7$ | Schwefel, Silicium, Selen, Scandium und/oder Gallium, |
| a' | 0,1 bis 3 , |
| b' | 0,01 bis 3 , |
| c' | 0,01 bis 3 , |
| d' | 0,01 bis 3 , |
| e' | 0 bis 5 , |
| f' | 0,1 bis 5 , |
| g' | 0,01 bis 3 , |
| h' | 0,001 bis 5 und |

n' eine Zahl, die durch die Wertigkeit und Häufigkeit der von Sauerstoff verschiedenen Elemente in II bestimmt wird.

Die EP-A 51 348 betrifft Massen der allgemeinen Formel III

$$Mo_{12} P_{a''} V_{b''} X^8_{c''} Cu_{d''} X^9_{g''} X^{10}_{h''} O_{n''} \qquad (III),$$

in der die Variablen folgende Bedeutung haben:

$X^8$ Kalium, Rubidium und/oder Cäsium,
$X^9$ Silber, Barium, Lanthan, Gallium, Aluminium, Cadmium, Titan, Tantal, Quecksilber, Blei und/oder Zink,
$X^{10}$ Schwefel, Mangan, Eisen, Kobalt, Nickel, Strontium, Indium, Tantal, Germanium und/oder Beryllium,

a" 0,1 bis 3,0 ,
b" 0,1 bis 2,0 ,
c" 0,1 bis 3,0 ,
d" 0,1 bis 2,0 ,
g" 0,01 bis 2,0 ,
h" 0 bis 2,0 und

n" eine Zahl, die durch die Wertigkeit und Häufigkeit der von Sauerstoff verschiedenen Elemente in III bestimmt wird.

Die Massen (II) und (III) werden unter anderem als Katalysatoren bei der Herstellung von Methacrylsäure durch katalytische Gasphasenoxidation von Methacrolein empfohlen. Nachteilig an diesen Massen (II) und (III) ist jedoch, daß bei ihrer Verwendung als Katalysatoren bei der Herstellung von Methacrylsäure durch katalytische Gasphasenoxidation von Methacrolein, die Selektivität, in der das Methacrolein in die Methacrylsäure überführt wird, nicht voll zu befriedigen vermag.

Die EP-B 102 688 und EP-A-0 376 117 betriffen Massen, die ebenfalls als Katalysatoren für die Herstellung von Methacrylsäure durch Oxidation von Methacrolein geeignet sind. Nachteilig an diesen Massen ist jedoch, daß sie in allen Fällen der Anwesenheit des toxischen Elements Arsen bedürfen.

Aufgabe der vorliegenden Erfindung war daher, insbesondere als Katalysatoren für die Herstellung von Methacrylsäure durch Gasphasenoxidation von Methacrolein geeignete Massen zur Verfügung zu stellen, bei deren Anwendung einerseits Methacrolein mit erhöhter Selektivität in Methacrylsäure überführt wird und die andererseits eine reduzierte Toxizität aufweisen. Demgemäß wurden die Massen der allgemeinen Formel I gefunden. Bevorzugt sind Massen I, in denen h 0,03 bis 0,5 und/oder g von 0 verschieden, vorzugsweise 0,04 bis 1 ist. Die erfindungsgemäßen Massen I sind in an sich bekannter Weise erhältlich. Sie können beispielsweise dadurch hergestellt werden, daß man als Ausgangsverbindungen geeignete Salze der sie konstituierenden elementaren Bestandteile, gegebenenfalls bei erhöhter Temperatur und unter Zusatz von Säuren oder Basen, in wäßrigem Medium durch Lösen und/oder Suspendieren fein verteilt, mischt, das Gemisch zur Trockene eindampft, die erhaltene Masse formt und in der Regel bei Temperaturen von 180 bis 480, vorzugsweise 350 bis 450°C im Luftstrom oder in inerter Atmosphäre, z.B. $N_2$ oder $CO_2$, calciniert. In dieser Form werden die erfindungsgemäßen Massen zweckmäßigerweise zur Verwendung als Vollkatalysatoren hergestellt, wobei Hohlzylinder mit einem Außendurchmesser und einer Länge von 4 bis 10 mm und einer Wandstärke von 1 bis 3 mm die bevorzugte Katalysatorgeometrie darstellen. Die Calcinierung kann in mehreren Temperaturstufen und/oder in verschiedenen Atmosphären durchgeführt werden. So kann z.B. in einer ersten Stufe bei 200 bis 260°C in Luft, in einer zweiten Stufe bei 420 bis 460°C in Stickstoff und in einer dritten Stufe bei 350 bis 410°C wiederum in Luft calciniert werden. Bei der beschriebenen Herstellungsweise wird Antimon üblicherweise als Antimontrioxid, Rhenium z.B. als Rhenium(VII)oxid, Molybdän vorzugsweise als Ammoniumsalz der Molybdän- oder Phosphormolybdänsäure, Bor z.B. als Borsäure, Vanadin in der Regel als Ammoniumvanadat oder Vanadinoxalat, Phosphor mit Vorteil als ortho-Phosphorsäure oder Di-Ammonium-Phosphat, Schwefel z.B. als Ammoniumsulfat und die kationischen Metalle normalerweise als Nitrate, Oxide, Hydroxide, Carbonate, Chloride, Formiate, Oxalate oder Acetate bzw. deren Hydrate eingesetzt. Das wäßrige Gemisch der Ausgangskomponenten kann als Hilfsmittel zusätzlich in Mengen von 1 bis 20 Gew.-%, bezogen auf die calcinierte Katalysatormasse, organische Verbindungen wie Stickstoff enthaltende zyklische Verbindungen, z.B. Pyridin, aber auch Carbonsäuren oder Alkohole enthalten. Das Trocknen erfolgt üblicherweise bei 60 bis 180°C und zur Verformung der getrockneten Masse können an sich bekannte Verfahren wie Tablettieren, Extrudieren oder Strangpressen angewendet werden, wobei Gleitmittel wie Graphit oder Stearinsäure sowie Formhilfsmittel und Verstärkungsmittel wie Mikrofasern aus Glas, Asbest, Siliciumcarbid oder Kaliumtitanat zugesetzt werden können. Die erfindungsgemäßen Massen können aber auch in Gestalt von Schalenkatalysatoren, das heißt auf ein vorgeformtes Trägermaterial aufgebracht, zur Herstellung von Methacrylsäure durch Gasphasenoxidation von Methacrolein angewendet werden, wobei das Aufbringen auf das Trägermaterial z.B. in Form der wäßrigen Ausgangslösung oder Suspension, verbunden mit anschließender Trocknung und Calcinierung, oder als bereits calcinierte pulverisierte Masse in Kombination mit einem Bindemittel erfolgen kann. Selbstverständlich können die erfindungsgemäßen Massen auch in Pulverform als Katalysatoren eingesetzt werden.

Die katalytische Gasphasenoxidation von Methacrolein zu Methacrylsäure unter Anwendung der erfindungsgemäßen Katalysatoren erfolgt in an sich bekannter Weise. Das Oxidationsmittel Sauerstoff kann z.B. in Form von Luft, aber auch in reiner Form eingesetzt werden. Aufgrund der hohen Reaktionswärme werden die Reaktionspartner vorzugsweise mit Inertgas wie $N_2$ und/oder mit Wasserdampf verdünnt. Vorzugsweise wird bei einem Methacrolein : Sauerstoff : Wasserdampf : Inertags Verhältnis von 1 : (1 bis 3): (2 bis 20) : (3 bis 30), besonders bevorzugt von 1 : (1 bis 3) : (3 bis 10) : (7 bis 18) gearbeitet. Das eingesetzte Methacrolein kann auf verschiedene Weise erhalten worden sein, z.B. durch Gasphasenoxidation von Isobutylen oder tert.-Butanol. Mit Vorteil wird Methacrolein eingesetzt, das durch Kondensation von Propanol mit Formaldehyd in Gegenwart von sekundären Aminen und Säuren in flüssiger Phase gemäß den in der DE-C-875 114 oder in der DE-B-2 855 514 beschriebenen Verfahren erhältlich ist. Die Gasphasenoxidation kann sowohl in Wirbelschichtreaktoren als auch in Festbettreaktoren ausgeführt werden. Vorzugsweise wird sie in Rohrbündelreaktoren durchgeführt, in deren Röhren die Katalysatormasse, vorzugsweise in Gestalt zylindrisch geformter Partikel, fest angeordnet ist. Die Reaktionstemperatur beträgt in der Regel 250 bis 350°C, der Reaktiondruck liegt üblicherweise im Bereich von 1 bis 3 bar und die Gesamtraumbelastung beträgt vorzugsweise 800 bis 1800 Nl/l/h. Unter diesen Bedingungen liegt der Methacroleinumsatz bei einfachem Reaktordurchgang üblicherweise bei 50 bis 80 mol-%. Vorzugsweise werden die genannten Randbedingungen im Rahmen des genannten Rasters so aufeinander abgestimmt, daß bei einfachem Durchgang durch den Reaktor ein Methacroleinumsatz von 60 bis 70 mol-% resultiert. Im Rahmen der beschriebenen katalytischen Gasphasenreaktion bewirkt der Einsatz der erfindungsgemäßen Massen als Katalysatoren eine Methacrylsäurebildung in erhöhter Selektivität und dies auch bei Methacroleinraumbelastungen von mehr als 60 Nl/l/h. Interessanterweise behalten die erfindungsgemäßen Massen diese Eigenschaft ebenso wie ihre Aktivität auch über längere Betriebszeiten bei, was eine bemerkenswerte Unempfindlichkeit der erfindungsgemäßen Massen, z.B. gegen Druck-, Temperatur- und Konzentrationsschwankungen, wiederspiegelt. Bei dem beschriebenen Verfahren wird jedoch nicht reine Methacrylsäure, sondern ein Gasgemisch, das neben Methacrylsäure in der Regel Nebenkomponent en wie Essig-, Malein-, Fumar-, Citracon-, Acryl- und Ameisensäure sowie die entsprechenden Aldehyde und Ketone aber auch nicht umgesetztes Methacrolein und Inertgas enthält, erhalten, von welchem die Methacrylsäure anschließend abgetrennt werden muß. Dies kann in an sich bekannter Weise erfolgen, z.B. indem man die Reaktorabgase nach indirekter und/oder direkter Kühlung bei Temperaturen von 40 bis 80°C mit Wasser wäscht, wobei eine wäßrige Methacrylsäurelösung erhalten wird, die nur noch geringe Anteile der Nebenkomponenten enthält und aus der die Methacrylsäure üblicherweise durch Extraktion mit einem organischen Lösungsmittel entfernt und von diesem durch Destillation abgetrennt wird. Umsatz, Selektivität und Verweilzeit sind in dieser Schrift wie folgt definiert:

$$\text{Umsatz U an Methacrolein (\%)} = \frac{\text{Molzahl umgesetztes Methacrolein}}{\text{Molzahl eingesetztes Methacrolein}} \times 100$$

$$\text{Selektivität des Produktes K (\%)} = \frac{\text{Molzahl Methacrolein umgesetzt zu K}}{\text{Molzahl Methacrolein insgesamt umgesetzt}} \times 100$$

$$\text{Verweilzeit (sec)} = \frac{\text{mit Katalysator gefülltes Leervolumen des Reaktors (l)}}{\text{durchgesetzte Synthesegasmenge (Nl/h)}} \times 3600$$

Beispiele

a) Herstellung von erfindungsgemäßen Massen B und Massen V zum Vergleich

B1:

i) In 600 g Wasser wurden bei 50°C 530 g Ammoniumheptamolybdat-tetrahydrat, das pro Mol Molybdän 0,03 Mol Kalium enthielt, 29,3 g Ammoniummetavanadat, 95 g Cäsiumnitrat, 106,5 g 45 gew.-%ige wäßrige ortho-Phosphorsäure, 31,1 g 35 gew.-%ige wäßrige Ammoniumsulfatlösung und 36,5 g Antimontrioxid eingerührt.

ii) Anschließend wurde dieses wäßrige Gemisch auf 95°C erhitzt, eine Lösung von 2,4 g Rhenium(VII)oxid und 30,2 Kupfer(II)nitrattrihydrat zugesetzt und bei der genannten Temperatur zur Trockene eingedampft. Aus der so erhaltenen Masse wurden anschließend Hohlzylinder mit einem Außendurchmesser von 7 mm, einer Länge von 6 mm und einem Hohlkreisdurchmesser von 3 mm geformt und 5 h bei 380°C im Luftstrom calciniert. Röntgenbeugungs-Pulveraufnahmen der erhaltenen Formlinge unter Anwendung der Cu-$K_\alpha$-Strahlung wiesen bei 2 $\Theta$ = 10,5°, 21,3°, 26,2° (Hauptmaximum) und 30,3° Beugungsmaxima auf, die dem Cäsiumsalz der Phosphormolybdatovanadatoheteropolysäure zugeordnet werden konnten.

B2 bis B15 und V1 bis V6: In entsprechender Weise wie B1 wurden auch die Katalysatoren B2 bis B15

und V1 bis V6, deren Summenformeln unter Verzicht der Sauerstoffangabe Tabelle 1 wiedergibt, hergestellt. Dabei wurde Zink als Zinknitrat-6-hydrat, Wismut als Wismut(III)nitrat-5-hydrat, Bor als Borsäure, Silber, Mangan, Rubidium und zusätzliches Kalium als Nitrate, Cer als äquimolares (bezogen auf Cer) Gemisch aus Cernitrat und Ceroxid und Zirkonium als Oxid in den der Stöchiometrie der Summenformeln in Tabelle 1 entsprechenden Mengen in die wäßrige Mischung eingebracht, wobei Zink, Wismut, Silber und Mangan im Abschnitt ii) und die anderen Elemente im Abschnitt i) eingerührt wurden.

b) Die Selektivität S der Methacrylsäurebildung bei Anwendung der Massen B1 bis B15 und V1 bis V6 aus a) als Gasphasenkatalysatoren.

Für diese vergleichende Übersicht wurden die Hohlzylinder aus a) pulverisiert (arithmetisch mittlerer Korndurchmesser 1 bis 2 mm) und in Rohrreaktoren (10 mm Innendurchmesser, 100 g Katalysatorschüttung, Salzbadkühlung) bei Reaktionstemperaturen von 270 bis 308°C mit einer Gasmischung der Zusammensetzung

5 Vol-% Methacrolein,
9 Vol-% Sauerstoff,
25 Vol-% Wasserdampf und
61 Vol-% Stickstoff

bei einer durchschnittlichen Verweilzeit von 3 sec und einer Methacroleinbelastung von 0,11 g/g/h beschickt (die Angaben in Vol-% beziehen sich auf Nl).

Die erhaltenen Reaktionsgase wurden auf 40°C abgekühlt und nacheinander mit Wasser und 50 gew.-%iger wäßriger Essigsäure gewaschen. Anschließend wurden die Waschflüssigkeiten gaschromatographisch und polarographisch analysiert und aus den Analyseergebnissen die Selektivität der Methacrylsäurebildung errechnet. Die Ergebnisse zeigt Tabelle 1.

Tabelle 1

| Masse | Stöchiometrie | Temp (°C) | U (%) | S (%) |
|---|---|---|---|---|
| B1 | $Mo_{12}P_{2}V_{1}Cs_{2}K_{0,03}Cu_{0,5}Sb_{1}S_{0,03}Re_{0,04}$ | 291 | 61,1 | 86,8 |
| B2 | $Mo_{12}P_{2}V_{1}Cs_{2}K_{0,03}Cu_{0,5}Sb_{1}S_{0,03}$ | 290 | 61,9 | 86,3 |
| V1 | $Mo_{12}P_{2}V_{1}Cs_{2}K_{0,03}Cu_{0,5}Sb_{1}S_{0,03}Zn_{0,3}$ | 295 | 62 | 85,9 |
| V2 | $Mo_{12}P_{2}V_{1}Cs_{2}K_{0,03}Cu_{0,5}Sb_{1}$ | 292 | 60,9 | 84,2 |
| V3 | $Mo_{12}P_{2}V_{1}Cs_{2}K_{0,03}Cu_{0,5}S_{0,03}$ | 281 | 61,8 | 81,5 |
| B3 | $Mo_{12}P_{1,5}V_{0,6}Cs_{1}K_{0,03}Cu_{0,5}Sb_{1}S_{0,03}Re_{0,04}$ | 303 | 61,8 | 89,1 |
| B4 | $Mo_{12}P_{1,5}V_{0,6}Cs_{1}K_{0,03}Cu_{0,5}Sb_{1}S_{0,03}$ | 291 | 62,3 | 88,7 |
| V4 | $Mo_{12}P_{1,5}V_{0,6}Cs_{1}K_{0,03}Cu_{0,5}Sb_{1}S_{0,03}Zn_{0,3}$ | 308 | 61,4 | 85,9 |
| V5 | $Mo_{12}P_{1,5}V_{0,6}Cs_{1}K_{0,03}Cu_{0,5}Sb_{1}$ | 298 | 62,5 | 85,1 |
| V6 | $Mo_{12}P_{1,5}V_{0,6}Cs_{1}K_{0,03}Cu_{0,5}S_{0,03}$ | 288 | 62,1 | 82,5 |

Tabelle 1 Forts.

| Masse | Stöchiometrie | Temp (°C) | U (%) | S (%) |
|---|---|---|---|---|
| B5 | $Mo_{12}P_{1,8}V_{0,8}Cs_{1}K_{0,03}Cu_{0,5}Sb_{1}S_{0,03}Re_{0,04}$ | 292 | 62,4 | 87,8 |
| B6 | $Mo_{12}P_{1,3}V_{0,4}Cs_{1}K_{0,03}Cu_{0,5}Sb_{1}S_{0,03}Re_{0,04}$ | 300 | 61,5 | 86,8 |
| B7 | $Mo_{12}P_{1,3}V_{0,4}Cs_{1}K_{0,03}Cu_{0,5}Sb_{0,8}S_{0,03}Re_{0,04}$ | 274 | 62,0 | 86,7 |
| B8 | $Mo_{12}P_{1,3}V_{0,4}Cs_{1}K_{0,03}Cu_{0,5}Sb_{0,5}S_{0,03}Re_{0,04}$ | 270 | 61,8 | 87,3 |
| B9 | $Mo_{12}P_{1,3}V_{0,4}Cs_{1}K_{0,03}Cu_{0,5}Sb_{1,3}S_{0,03}RE_{0,04}$ | 285 | 62,1 | 87,1 |
| B10 | $Mo_{12}P_{1,3}V_{0,4}Cs_{1}K_{0,03}Cu_{0,05}Sb_{1}S_{0,03}Re_{0,05}Ag_{0,1}$ | 302 | 62,0 | 86,9 |
| B11 | $Mo_{12}P_{1,5}V_{0,6}Cs_{1}K_{0,03}Cu_{0,5}Sb_{1}S_{0,03}Re_{0,04}Ce_{0,02}$ | 287 | 62,5 | 86,8 |
| B12 | $Mo_{12}P_{1,5}V_{0,6}Cs_{1}K_{0,03}Cu_{0,5}Sb_{1}S_{0,03}Mn_{0,1}$ | 300 | 61,1 | 88,8 |
| B13 | $Mo_{12}P_{1,5}V_{0,6}Cs_{0,8}K_{0,03}Cu_{0,5}Sb_{1}S_{0,03}Rb_{0,2}Mn_{0,1}Bi_{0,05}$ | 286 | 62,1 | 88,8 |
| B14 | $Mo_{12}P_{1,5}V_{0,6}Cs_{1}K_{0,03}Cu_{0,5}Sb_{1}S_{0,03}B_{0,1}$ | 285 | 62,3 | 88,9 |
| B15 | $Mo_{12}P_{1,5}V_{0,6}Cs_{1}K_{0,03}Cu_{0,5}Sb_{1}S_{0,03}Zr_{0,1}$ | 282 | 61,8 | 88,7 |

c) Die Selektivität S der Methacrylsäurebildung bei Anwendung von erfindungsgemäßen Massen aus a) als Funktion der Betriebsdauer

c1) In einem Rohrreaktor (Stahlrohr, 26 mm Durchmesser, Salzbadkühlung) wurde ein Liter Katalysatorschüttung B3 (Hohlzylinder) bei einer Reaktionstemperatur von ca. 290°C mit einer Gasmischung der Zusammensetzung

5 Vol-% Methacrolein,
10 Vol-% Sauerstoff,
25 Vol-% Wasserdampf,
1,2 Vol-% CO,
1,4 Vol-% $CO_2$ und
0,3 Vol-% Methanol

bei einer Methacroleinbelastung von 110 g/l/h beschickt (die Angaben in Vol-% beziehen sich auf Nl). Die Bestandteile CO, $CO_2$ und Methanol simulieren in der Praxis infolge Kreisgasführung von nicht umgesetztem Methacrolein üblicherweise anwesende Nebenkomponenten. Die Reaktionstemperatur wurde als Funktion der Betriebsdauer so variiert, daß bei einfachem Durchgang ein Methacroleinumsatz von 60 % beibehalten wurde. Nach 120 Betriebsstunden betrug S 85,7 % (291°C), nach 1800 Betriebsstunden betrug S 88,3 % (286°C) und nach 3600 Betriebsstunden betrug S 87,9 % (287°C)

c2) Wie c1, nur wurde anstelle von B3 der Katalysator B4 eingesetzt. Nach 120 Betriebsstunden betrug S 86,1 % (289°C) und nach 1728 Betriebsstunden 89,5 % (283°C).

## Patentansprüche

### Patentansprüche für folgende Vertragsstaaten: BE, DE, FR, GB, IT

1. Massen der allgemeinen Formel I

$$Mo_{12} P_a V_b X^1_c X^2_d X^3_e Sb_f Re_g S_h O_n \quad (I),$$

in der die Variablen folgende Bedeutung haben:

$X^1$ Kalium, Rubidium und/oder Cäsium,
$X^2$ Kupfer und/oder Silber,
$X^3$ Cer, Bor, Zirkonium, Mangan und/oder Wismut,
a 0,5 bis 3,0 ,
b 0,01 bis 3,0 ,
c 0,2 bis 3,0 ,
d 0,01 bis 2,0 ,
e 0 bis 2,0 ,
f 0,01 bis 2,0 ,
g 0 bis 1,0 ,
h 0,001 bis 0,5 und

n eine Zahl, die durch die Wertigkeit und Häufigkeit der von Sauerstoff verschiedenen Elemente in I bestimmt wird.

2. Massen nach Anspruch 1, in denen h 0,03 bis 0,5 beträgt.

3. Massen nach den Ansprüchen 1 oder 2, in denen g 0,04 bis 1 beträgt.

4. Verfahren zur Herstellung von Methacrylsäure durch katalytische Gasphasenoxidation von Methacrolein, dadurch gekennzeichnet, daß Massen gemäß den Ansprüchen 1 bis 3 als Katalysatoren eingesetzt werden.

5. Verfahren zur Herstellung von Massen gemäß den Ansprüchen 1 bis 3, dadurch gekennzeichnet, daß man als Ausgangsverbindungen Salze der sie konstituierenden elementaren Bestandteile in wäßrigem Medium durch Lösen und/oder Suspendieren fein zerteilt, mischt, das Gemisch zur Trockene eindampft, die erhaltene Masse formt und bei 180 bis 480°C calciniert.

**Patentansprüche für folgenden Vertragsstaat: ES**

1. Verfahren zur Herstellung von Massen der allgemeinen Formel I

$$Mo_{12}\,P_a\,V_b\,X^1_c\,X^2_d\,X^3_e\,Sb_f\,Re_g\,S_h\,O_n \qquad (I),$$

in der die Variablen folgende Bedeutung haben:

$X^1$ Kalium, Rubidium und/oder Cäsium,
$X^2$ Kupfer und/oder Silber,
$X^3$ Cer, Bor, Zirkonium, Mangan und/oder Wismut,
a 0,5 bis 3,0 ,
b 0,01 bis 3,0 ,
c 0,2 bis 3,0 ,
d 0,01 bis 2,0 ,
e 0 bis 2,0 ,
f 0,01 bis 2,0 ,
g 0 bis 1,0 ,
h 0,001 bis 0,5 und

n eine Zahl, die durch die Wertigkeit und Häufigkeit der von Sauerstoff verschiedenen Elemente in I bestimmt wird, dadurch gekennzeichnet, daß man als Ausgangsverbindungen Salze der sie konstituierenden elementaren Bestandteile in wäßrigem Medium durch Lösen und/oder Suspendieren fein zerteilt, mischt, das Gemisch zur Trockene eindampft, die erhaltene Masse formt und bei 180 bis 480°C calciniert.

2. Verfahren nach Anspruch 1, dadurch gekennzeichnet, daß h 0,03 bis 0,5 beträgt.

3. Verfahren nach den Ansprüchen 1 oder 2, dadurch gekennzeichnet, daß g 0,04 bis 1 beträgt.

4. Verfahren zur Herstellung von Methacrylsäure durch katalytische Gasphasenoxidation von Methacrolein, dadurch gekennzeichnet, daß als Katalysatoren die gemäß einem Verfahren der Ansprüche 1 bis 3 erhaltenen Verfahrensprodukte eingesetzt werden.

**Claims**

**Claims for the following Contracting States: BE, DE, FR, GB, IT**

1. A composition of the formula I

$$MO_{12}\,P_a\,V_b\,X^1_c\,X^2_d\,X^3_e\,Sb_f\,Re_g\,S_h\,O_n \qquad (I),$$

where

$X^1$ is potassium, rubidium or cesium,
$X^2$ is copper or silver,
$X^3$ is cerium, boron, zirconium, manganese or bismuth,
a is from 0.5 to 3.0 ,
b is from 0.01 to 3.0 ,
c is from 0.2 to 3.0 ,
d is from 0.01 to 2.0 ,
e is from 0 to 2.0 ,
f is from 0.01 to 2.0 ,
g is from 0 to 1.0 ,
h is from 0.001 to 0.5 and

n is a number determined by the valency and content of the elements different from oxygen in I.

2. A composition as claimed in claim 1, where h is from 0.03 to 0.5.

3. A composition as claimed in claim 1 or 2, where g is from 0.04 to 1.

4. A process for preparing methacrylic acid by catalytic gas-phase oxidation of methacrolein, which comprises employing compositions as claimed in claims 1 to 3 as catalysts.

5. A process for preparing compositions as claimed in claims 1 to 3, which comprises as salts of the elements constituting them being finely dispersed in aqueous medium by dissolving or suspending, being mixed, the mixture being evaporated to dryness, and the resulting composition being shaped and calcined at 180 to 480°C.

**Claims for the following Contracting State: ES**

1. A process for preparing a composition of the formula I

$$MO_{12} P_a V_b X^1_c X^2_d X^3_e Sb_f Re_g S_h O_n \quad (I),$$

where

$X^1$ is potassium, rubidium or cesium,
$X^2$ is copper or silver,
$X^3$ is cerium, boron, zirconium, manganese or bismuth,
a is from 0.5 to 3.0 ,
b is from 0.01 to 3.0 ,
c is from 0.2 to 3.0 ,
d is from 0.01 to 2.0 ,
e is from 0 to 2.0 ,
f is from 0.01 to 2.0 ,
g is from 0 to 1.0 ,
h is from 0.001 to 0.5 and

n is a number determined by the valency and content of the elements different from oxygen in I, which comprises as starting compounds salts of the elements constituting them being finely dispersed in aqueous medium by dissolving or suspending, being mixed, the mixture being evaporated to dryness, and

the resulting composition being shaped and calcined at 180 to 480°C..

2. A process as claimed in claim 1, wherein h is from 0.03 to 0.5.

3. A process as claimed in claim 1 or 2, wherein g is from 0.04 to 1.

4. A process for preparing methacrylic acid by catalytic gas-phase oxidation of methacrolein, which comprises employed process products obtained by the process as claimed in claims 1 to 3 as catalysts.

## Revendications

### Revendications pour les Etats contractants suivants: BE, DE, FR, GB, IT

1. Matières à mouler de la formule générale I

$$MO_{12} P_a V_b x^1_c x^2_d X^3_e Sb_f Re_g S_h O_n \quad (I)$$

dans laquelle les diverses variables ont les significations qui suivent :

$X^1$ = potassium, rubidium et/ou césium,
$X^2$ = cuivre et/ou argent,
$X^3$ = cérium, bore, zirconium, manganèse et/ou bismuth,
a = 0,5 à 3,0 "
b = 0,01 à 3,0 "
c = 0,2 à 3,0 "
d = 0,01 à 2,0 "
e = 0 à 2,0 "
f = 0,01 à 2,0 "
g = 0 à 1,0 "
h = 0,001 à 0,5 et

n = un nombre qui est déterminé par la valence et la fréquence des éléments différant de l'oxygène dans I.

2. Matières selon la revendication 1, dans laquelle h varie de 0,03 à 0,5.

3. Matières selon la revendication 1 ou 2, dans lesquelles g varie de 0,04 à 1.

4. Procédé de fabrication de l'acide méthacrylique par l'oxydation catalytique en phase gazeuse de la méthacroléine, caractérisé en ce que l'on utilise des matières selon l'une quelconque des revendications 1 à 3 à titre de catalyseurs.

5. Procédé de fabrication de matières selon l'une quelconque des revendications 1 à 3, caractérisé en ce que, à titre de composés de départ, on divise finement des sels des composants élémentaires constitutifs de ces matières de départ en milieu aqueux par dissolution et/ou suspension, on mélange le tout, on concentre le mélange par évaporation jusqu'à siccité, on moule la matière obtenue et on la calcine à 180-480°C.

### Revendication pour l'Etat contractant suivant: ES

1. Procédé de fabrication de matières à mouler de la formule générale I

$$MO_{12} P_a V_b X^1_c X^2_d X^3_e Sb_f Re_g S_h O_n \quad (I),$$

dans laquelle les diverses variables ont les significations qui suivent :

$X^1$ = potassium, rubidium et/ou césium,
$X^2$ = cuivre et/ou argent,
$X^3$ = cérium, bore, zirconium, manganèse et/ou bismuth
a = 0,5 à 3,0 "
b = 0,01 à 3,0 "
c = 0,2 à 3,0 "
d = 0,01 à 2,0 "
e = 0 à 2,0 "
f = 0,01 à 2,0 "
g = 0 à 1,0 "
h = 0,001 à 0,5 et

n = un nombre qui est déterminé par la valence et la fréquence des éléments différant de l'oxygène dans I, caractérisé en ce que, à titre de composés de départ, on divise finement des sels des composants élémentaires constitutifs de ces matières de départ en milieu aqueux par dissolution et/ou suspension, on mélange le tout, on concentre le mélange par évaporation jusqu'à siccité, on moule la matière obtenue et on la calcine à 180-480°C.

**2.** Procédé suivant la revendication 1, caractérisé en ce que h varie de 0,03 à 0,5.

**3.** Procédé suivant la revendication 1 ou 2, caractérisé en ce que g varie de 0,04 à 1.

**4.** Procédé de fabrication de l'acide méthacrylique par l'oxydation catalytique en phase gazeuse de la méthacroléine, caractérisé en ce que l'on utilise, à titre de catalyseurs, les produits obtenus par la mise en oeuvre d'un procédé suivant l'une quelconque des revendications 1 à 3.